Europäisches Patentamt

European Patent Office

Office européen des brevets

(19)

(11) Veröffentlichungsnummer: **0 377 645 B1**

(12) **EUROPÄISCHE PATENTSCHRIFT**

(45) Veröffentlichungstag der Patentschrift:
06.11.91 Patentblatt 91/45

(51) Int. Cl.⁵ : **G01P 15/08**

(21) Anmeldenummer: **88908203.8**

(22) Anmeldetag: **15.09.88**

(86) Internationale Anmeldenummer:
**PCT/EP88/00841**

(87) Internationale Veröffentlichungsnummer:
**WO 89/02602 23.03.89 Gazette 89/07**

(54) **VERFAHREN ZUR KURVENERKENNUNG UND QUERBESCHLEUNIGUNGSERMITTLUNG IN EINEM FAHRZEUG.**

(30) Priorität: 16.09.87 DE 3731077

(43) Veröffentlichungstag der Anmeldung:
18.07.90 Patentblatt 90/29

(45) Bekanntmachung des Hinweises auf die
Patenterteilung:
06.11.91 Patentblatt 91/45

(84) Benannte Vertragsstaaten:
AT CH DE FR GB LI SE

(56) Entgegenhaltungen:
EP-A- 0 126 052
US-A- 4 085 363

(73) Patentinhaber: ROBERT BOSCH GmbH
Postfach 10 60 50
W-7000 Stuttgart 10 (DE)

(72) Erfinder: MEISSNER, Manfred
Im Eichrain 33
W-7145 Unterriexingen (DE)
Erfinder: SIGL, Alfred
Waldeck 8
W-7126 Sersheim (DE)

(74) Vertreter: Kammer, Arno, Dipl.-Ing.
ROBERT BOSCH GmbH Zentralabteilung
Patente Postfach 50
W-7000 Stuttgart 1 (DE)

## Beschreibung

Die Erfindung betrifft ein Verfahren zur Erzeugung unterschiedlicher Signale abhängig davon, ob ein Fahrzeug in einer Kurve oder auf einer Geraden fährt und ein Verfahren zur Ermittlung der Querbeschleunigung bei einer Kurvenfahrt.

### Stand der Tchenik

Es ist bei Navigationsanlagen bekannt, aus der Differenz $\Delta V$ der Sensorsignale an den nicht angetriebenen Rädern eines Fahrzeugs die ungefähre Richtung der Fahrzeugfahrt zu ermitteln.

Es ist auch bekannt, bei Antiblockierregelsystemen und Antriebsschlupfregelsystemen Lenkwinkelsensoren und/oder Querbeschleunigungsmesser zu verwenden und deren Ausgangssignale als Parameter in die Regelung eingehen zu lassen. Hier reicht die Verwendung lediglich der Differenz $\Delta V$ nicht aus, weil einmal Störeinflüsse die Differenzen verfälschen können und weil Unterschiede in den Abrollumfängen ebenfalls zu falschen Aussagen führen.

### Aufgabe und Lösung

Der Erfindung liegt die Aufgabe zugrunde unter Verwendung lediglich der Geschwindigkeitssensoren, also ohne zusätzlichen Sensor eine brauchbare Kurvenerkennung zu schaffen. Weiterhin soll auch eine Aussage über die vorhandene Querbeschleunigung gemacht werden.

Diese Aufgabe wird durch die in den nebengeordneten Ansprüchen 1 und 2 angegebenen Merkmale gelöst. Dabei wird in beiden Ansprüchen das gleiche Lösungsprinzip benutzt.

### Figurenbeschreibung

Anhand der Zeichnung wird ein Ausführungsbeispiel der Erfindung beschrieben. Es zeigen

Fig. 1 ein Blockschaltbild dieses Ausführungsbeispiels,

Fig. 2 ein anderes Ausführungsbeispeil der Erfindung,

Fig. 3 und 4 Diagramme zur Erläuterung der Erfindung.

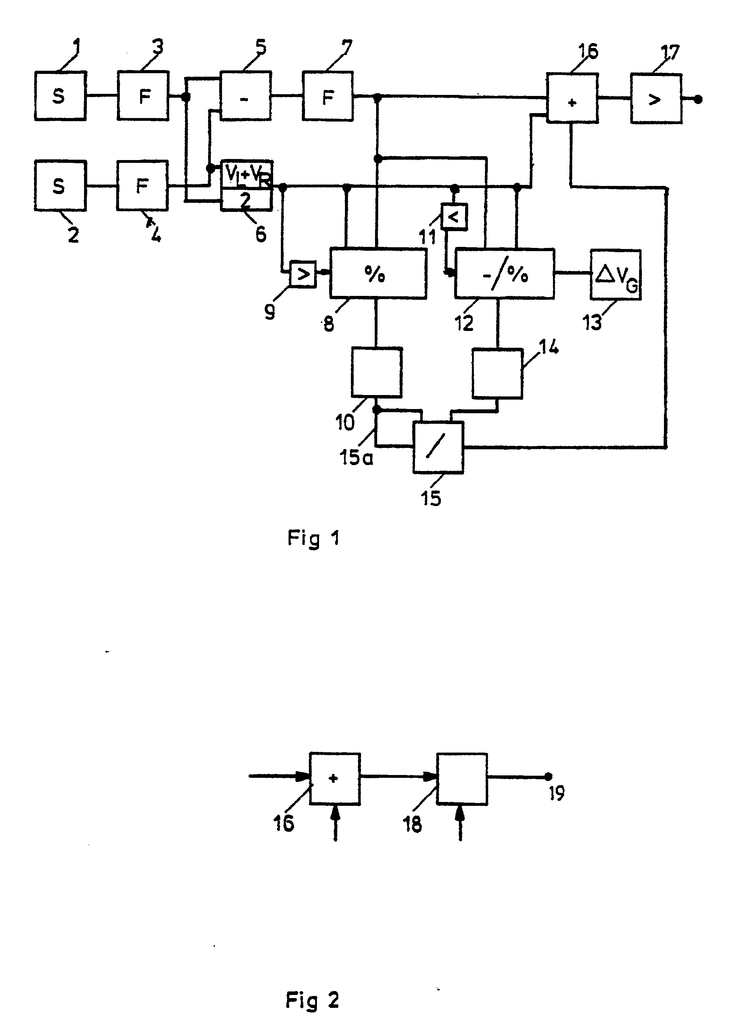

In Fig.1 sind den nicht angetriebenen Rädern zugeordnete Geschwindigkeitssensoren mit 1 und 2, diesen nachgeschaltete Filter mit 3 und 4 bezeichnet. Diese Filter sind so ausgelegt, daß die Ausgangssignale $V_{LF}$ und $V_{RF}$ der Filter den Radgeschwindigkeitssignalen $V_L$ und $V_R$ der Sensoren 1 und 2 nur mit einer maximalen Steigung von z.B. $\pm 1,38$ g,g = 9,81 m/s$^2$, können. In einem Block 5 wird die Differenz $\Delta V$ der gefilterten Signale gebildet. In einem Block 6 wird der Mittelwert der gefilterten Signale $V_M$ =

$\dfrac{V_{LF} + V_{RF}}{2}$ gebildet. Ein Block 7 dient der Filterung des Differenzssignals $\Delta V$.

Die Filterung ist so ausgelegt, daß die Ausgangssignale $\Delta V_F$ des Filters 7 den Eingangssignalen nur mit einer maximalen Steigung von z.B. $\pm 0,18$ g,g = 9,81 m/s$^2$, folgen. Dieser Bemessung liegt die Erkenntnis zugrunde, daß schnellere Änderungen von Störungen nicht von normalen Geschwindigkeitsänderungen herrühren können.

In Block 8 wird ein Korrektursignal $K_1$ gebildet. Hierzu werden die Signale $\Delta V_F$ und $V_M$ dem Block 8 zugeführt. Außerdem erfolgt eine Aktivierung dieses Blocks 8 über die Schwellwertstufe 9 nur, wenn die Geschwindigkeit $V_M$ (= Fahrzeuggeschwindigkeit) z.B. über 100 km/h liegt. Aus den nacheinander in kurzen Zeitabständen ermittelten $K_1$-Werten wird in einem Block 10 der Mittelwert $\overline{K}_1$ gebildet und dieser gespeichert. Bei der einundzwanzigsten Messung z.B. lautet der $\overline{K}_1$-Wert:

$$\overline{K}_1 = \frac{20\,\overline{K}_1 + K_{1neu}}{21}$$

Man kann nach einer bestimmten Zahl von Meßwerten die Mittelwertbildung abbrechen und nun währen einer Fahrt den zuletzt ermittelten Mittelwert weiter verwenden.

Mittels Blöcken 11-13 werden die Korrekturwerte $K_2$ ermittelt. Hierzu werden dem Subtrahier- und Dividier- und Vergleichsblock 12 die Signale $\Delta V_F$ und $V_M$ zugeführt.

Der Ausdruck

$$K_2 = \frac{\Delta V_F - \Delta V_G}{V_M}$$

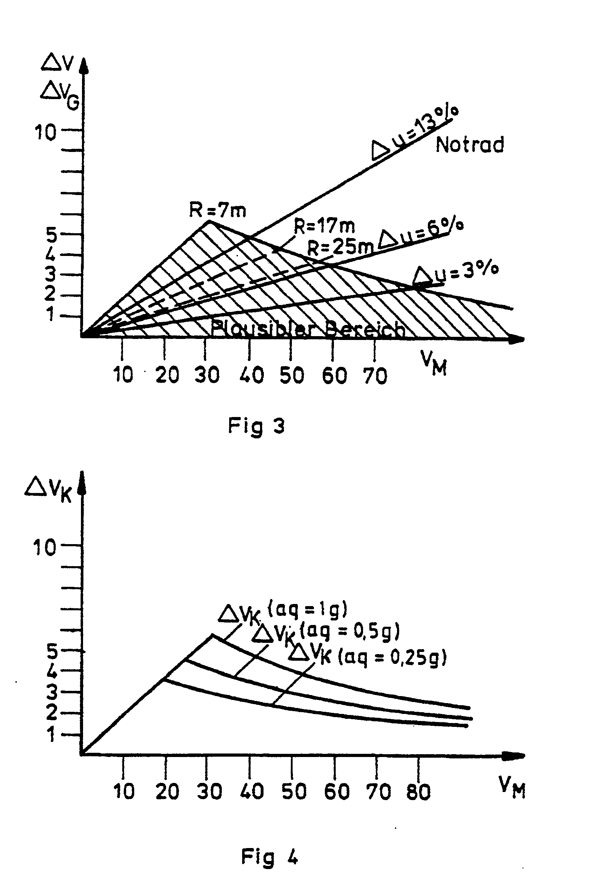

wird gebildet, wenn der Block über die Schwellwertstufe 11 bei $V_M \leqq 100$ km/h aktiviert wird und wenn $|\Delta V_F| > \Delta V_G$ ist. Das für die Bildung von $K_2$ und für den Vergleich benötigte $\Delta V_G$ ist als Kurve im Speicher 13 abgespeichert. Diese Kurve $\Delta V_G$ ist in Fig. 3 als Funktion der Geschwindigkeit dargestellt. Der schraffierte Bereich, den die Kurve begrenzt, stellt den Plausibilitätsbereich dar. Die Kurve selbst stellt die Kurvengrenzgeschwindigkeit in Abhängigkeit von der Fahrzeuggeschwindigkeit dar. Übersteigt der Betrag von ($\pm \Delta V_F$) diese Grenze, so kann das nur auf unterschiedlichen Abrollumfängen oder auf einer Drehung des Fahrzeugs um die Hochachse beruhen. Mit steigender Geschwindigkeit gewinnt die bei der Erfindung durchgeführte Plausibilitätsprüfung an Aussagekraft, weshalb der oberhalb von 100 km/h gewonnene Korrekturwert $K_1$, wenn er nur einmal gewonnen wurde, den Vorzug erhält. Auch aus den $K_2$-Werten wird in einem Block 14 ein gemittelter Wert $\overline{K}_2$ gewonnen. Eine als Schalter dargestellte Auswahlschaltung 15 wählt, wenn ein $K_1$-Wert bei einer Fahrt einmal gewonnen wurde, diesen Wert für den Rest der Fahrt aus, was durch die Leitung 15a angedeutet ist.

In einem Überlagerungsblock 16 wird der so gewonnen Korrekturwert $\overline{K}_1$ oder $\overline{K}_2$ verknüpft mit $V_M$ dem je nach Kurvenrichtung positiven oder negativen $\Delta V_F$ zu $\Delta V_K$ überlagert. ($\Delta V_K = \Delta V_F - \overline{K}i\, V_M$) Ein nachgeschalteter Vergleicher 17 gibt ein Signal ab, wenn $\Delta V_K$ einen kleinen Geschwindigkeitswert von z.B. 2 km/h übersteigt (= Aussage-Kurve) und ändert das Signal, wenn z.B. 1,5 km/h unterschritten werden (Aussage Gerade).

Wenn man dem Überlagerer 16 gemäß Fig. 2 ein Glied 18 nachschaltet, in dem Kurven entsprechend Fig. 4 abgelegt sind, wobei diese Kurven die Funktionen $\Delta V_K$ über der Geschwindigkeit für unterschiedliche Quersbeschleunigugen $a_q$ darstellen, so kann dort bei Eingabe des $\Delta V_K$ und der Geschwindigkeit $V_M$ die zugehörige Querbeschleunigung ermittelt und auf Klemme 19 ausgegeben werden.

## Patentansprüche

1. Verfahren zur Erzeugung unterschiedlicher Signale abhängig davon, ob ein Fahrzeug in einer Kurve oder auf einer Geraden fährt unter Verwendung von den nicht angetriebenen Rädern zuzuordnenden Geschwindigkeitssensoren und Auswertung der Differenz $\Delta V$ der Geschwindigkeitssignale $V_R$ und $V_L$, dadurch gekennzeichnet, daß die Differenz $\Delta V$ derart gefilter wird, daß sie Änderungen mit einer Steigung größer als $\pm$ a, a liegt in der Größenordnung von 0,2 g mit g = 9,81 m/s$^2$, nur verzögert folgt, daß aus der gefilterten Differenz $\Delta V_F$ und dem Mittelwert $V_M$ der Geschwindigkeitssignale Korrektursignale $K_I$ gemäß folgender Beziehungen gebildet werden:

$$K_1 = \frac{\Delta V_F}{V_M} \text{ wenn } V_M > b \text{ km/h ist und}$$

$$K_2 = \frac{\Delta V_F - \Delta V_G}{V_M} \text{ wenn } V_M \leqq b \text{ km/h ist}$$

wobei $\Delta V_G$ durch eine abgespeicherte, von der Fahrzeuggeschwindigkeit abhängige Funktion gegeben ist und $K_2$ zudem nur gebildet wird, wenn $|\Delta V_F| > \Delta V_G$ wird, daß aus den nacheinander ermittelten Korrektursignalen $K_I$ ein Mittelwert $\overline{K}_I$ gebildet wird, daß eine korrigierte Differenz $\Delta V_K$ aus der gefilterten Differenz $\Delta V_F$ gemäß

$$\Delta V_K = \Delta V_F - \overline{K}_I\, V_M$$

gebildet wird, wobei das Korrektursignal $\overline{K}_1$ verwendet wird, wenn einmal während einer Fahrt $K_1$ gebildet wurde und daß ein eine Kurvenfahrt anzeigenden Signal erzeugt wird, wenn $\Delta V_K$ einen kleinen Geschwindigkeitswert überschreitet.

2. Verfahren zur Ermittlung der Querbeschleunigung bei einer Kurvenfahrt eines Fahrzeugs unter Verwendung von den nicht angetriebenen Rädern zugeordneten Geschwindigkeitssensoren und Auswertung der Differenz $\Delta V$ der Geschwindigkeitssignale $V_R$ und $V_L$, dadurch gekennzeichnet, daß die Differenz $\Delta V$ derart gefiltert wird, daß sie Änderungen mit einer Steigung größer als $\pm$ a, a liegt in der Größenordnung von 0,2 g mit g = 9,81 m/s$^2$, nur verzögert folgt, daß aus der gefilterten Differenz $\Delta V_F$ und dem Mittelwert $V_M$ der Geschwindigkeitssignale Korrektursignale $K_I$ gemäß folgender Beziehungen gebildet werden:

$$K_1 = \frac{\Delta V_F}{V_M} \text{ wenn } V_M > b \text{ km/h ist und}$$

$$K_2 = \frac{\Delta V_F - \Delta V_G}{V_M} \text{ wenn } V_M \leqq b \text{ km/h ist}$$

wobei $\Delta V_G$ durch eine abgespeicherte, von der Fahrzeuggeschwindigkeit abhängige Funktion gegeben ist und $K_2$ gebildet wird, wenn $|\Delta V_F| > \Delta V_G$ wird, daß aus den nacheinander ermittelten Korrektursignalen $K_I$ ein Mittelwert $\overline{K}_I$ gebildet wird, daß eine korrigierte Differenz aus der gefilterten Differenz $\Delta V_F$ gemäß

$$\Delta V_K = \Delta V_F - \overline{K}_I\, V_M$$

gebildet wird, wobei das Korrektursignal $\overline{K}_1$ verwendet wird, wenn einmal während einer Fahrt $K_1$ gebildet wurde und daß die Querbeschleunigung aus den Größen $\Delta V_K$ und $V_M$ berechnet wird.

3. Verfahren nach Anspruch 1 oder 2, dadurch gekennzeichnet, daß auch die Geschwindigkeitssignale $V_R$ und $V_L$ mit einer Filtergröße c in der Größenordnung von 1,4 g mit g = 9,81 m/s$^2$ gefiltert werden.

## Claims

1. Process for generating different signals depening on whether a vehicle is driving in a bend or along a straight line with the use of speed sensors assigned to the non-driven wheels, and for evaluating the difference $\Delta V$ between the speed signals $V_R$ and $V_L$, characterised in that the difference $\Delta V$ is filtered in such a way that it follows changes with a gradient of greater than $\pm$ a, where a is in the order of magnitude of 0.2 g with g = 9.81 m/s$^2$ only in a delayed fashion, in that correction signals $K_I$ are formed from the filtered difference $\Delta V_F$ and the mean $V_M$ of the speed signals in accordance with the following relationships:

$$K_1 = \frac{\Delta V_F}{V_M} \text{ if } V_M > b \text{ km/h, and}$$

$$K_2 = \frac{\Delta V_F - \Delta V_G}{V_M} \text{ if } V_M \leqq b \text{ km/h,}$$

$\Delta V_G$ being given by a stored function dependent on the vehicle speed and, moreover, $K_2$ being formed only if $|\Delta V_F| > \Delta V_G$, in that a means $\overline{K}_I$ is formed from the consecutively determined correction signals $K_I$, in that a corrected difference $\Delta V_K$ is formed from the filtered difference $\Delta V_F$ in accordance with

$$\Delta V_K = \Delta V_F - \overline{K}_I\, V_M$$

the correction signal $\overline{K}_1$ being used once $K_1$ has been

formed during a journey, and in that a signal indicating cornering is generated if $\Delta V_K$ exceeds a small speed value.

2. Process for determining the transverse acceleration during cornering of a vehicle, with the use of speed sensors assigned to the non-driven wheels, and for evaluating the difference $\Delta V$ between the speed signals $V_R$ and $V_L$, characterised in that the difference $\Delta V$ is filtered in such a way that it follows changes with a gradient of greater than $\pm$ a, where a is in the order of magnitude of 0.2 g with g = 9.81 m/s$^2$ only in a delayed fashion, in that correction signals $K_1$ are formed from the filtered difference $\Delta V_F$ and the means $V_M$ of the speed signals in accordance with the following relationships:

$$K_1 = \frac{\Delta V_F}{V_M} \text{ if } V_M > b \text{ km/h, and}$$

$$K_2 = \frac{\Delta V_F - \Delta V_G}{V_M} \text{ if } V_M \leqq b \text{ km/h,}$$

$\Delta V_G$ being given by a stored function dependent on the vehicle speed and, moreover, $K_2$ being formed if $\Delta V_F > \Delta V_G$, in that a mean $\overline{K_1}$ is formed from the consecutively determined correction signals $K_i$, in that a corrected difference is formed from the filtered difference $\Delta V_F$ in accordance with

$$\Delta V_K = \Delta V_F - \overline{K_i} V_M$$

the correction signal $\overline{K_1}$ being used once $K_1$ has been formed during a journey, and in that the transverse acceleration is computed from the parameters $\Delta V_K$ and $V_M$.

3. Process according to Claim 1 or 2, characterised in that the speed signals $V_R$ and $V_L$ are also filtered using a filter size c in the order of magnitude of 1.4 g with g = 9.81 m/s$^2$.

## Revendications

1. Procédé pour obtenir des signaux différents en fonction de ce qu'un véhicule se déplace dans un virage ou bien sur une droite, en utilisant des détecteurs de vitesse associés aux roues non entraînées, et en exploitant la différence $\Delta V$ des signaux de vitesse $V_R$ et $V_L$, procédé caractérisé en ce que la différence $\Delta V$ est filtrée de façon qu'elle ne suit qu'avec retard les variations avec une pente supérieure à $\pm$ a, a se situant dans un ordre de grandeur de 0,2 g avec g = 9,81 m/s$^2$, et en ce que, à partir de la différece filtrée $\Delta V_S$ et de la valeur moyenne $V_M$ des signaux de vitesse, des signaux de correction $K_i$ sont formés selon les relations suivantes :

$$K_1 = \frac{\Delta V_F}{V_M} \text{ lorsque } V_M > b \text{ km/h}$$

$$K_2 = \frac{\Delta V_F - \Delta V_G}{V_M} \text{ lorsque } V_M \leqq b \text{ km/h}$$

dans lesquelles $\Delta V_G$ est donné par une fonction mémorisée dépendante de la vitesse du véhicule, tan-

dis qu'en outre, $K_2$ n'est formé que lorsque $|\Delta V_F| > \Delta V_G$ en ce que, à partir des signaux de correction $K_i$ déterminés successivement, il est formé une valeur moyenne $K_i$ et en ce qu'une différence corrigée $\Delta V_K$ est formée à partir de la différence filtrée $\Delta V_F$ selon la relation :

$$\Delta V_K = \Delta V_F - K_i V_M$$

le signal de correction $K_i$ étant utilisé lorsque $K_1$ a été formé une fois pendant un déplacement, et en ce qu'un signal indiquant un déplacement en courbe est produit lorsque $\Delta V_K$ dépasse une petite valeur de vitesse.

2. Procédé pour déterminer l'accélération transversale lors d'un déplacement en courbe d'un véhicule, en utilisant des détecteurs de vitesse associés aux roues non entraînées et en exploitant la différence $\Delta V$ des signaux de vitesse $V_R$ et $V_L$, procédé caractérisé en ce que la différence $\Delta V$ est filtrée de façon qu'elle ne suive qu'avec retard les variations comportant une pente supérieure à $\pm$ a, a se situant dans un ordre de grandeur de 0,2 g, avec g = 9,81 m/s, en ce que, à partir de la différence ainsi filtrée $\Delta V_F$ et la valeur moyenne $V_M$ des signaux de vitesse, des signaux de correction $K_i$ sont formés selon les relations suivantes :

$$K_1 = \frac{DV_F}{V_M} \text{ lorsque } V_M > b \text{ km/h}$$

$$K_2 = \frac{\Delta V_F - \Delta V_G}{V_M} \text{ lorsque } V_M \leqq b \text{ km/h}$$

dans lesquelles $\Delta V_G$ est donné par une fonction mémorisée dépendant de la vitesse du véhicule, et $K_2$ est formé quand $|\Delta V_F| > \Delta V_G$, et en ce que, à partir des signaux de correction $K_i$ déterminés successivement, il est formé une valeur moyenne $K_i$ et une différence corrigée $\epsilon\sigma\theta$ $\phi\omega\rho\mu\acute{\epsilon}\epsilon$ à partir de la différence $\Delta V_F$ filtrée, selon la relation :

$$\Delta V_K = \Delta V_F - K_i V_M$$

le signal de correction $K_i$ étant utilisé lorsque $K_1$ a été formé une fois pendant un déplacement, et en ce que l'accélération transversale est calculée à partir des grandeurs $\Delta V_K$ et $V_M$.

3. Procédé selon la revendication 1 ou la revendication 2, caractérisé en ce qu'également, les signaux de vitesse $V_R$ et $V_L$ sont filtrés avec une grandeur de filtration c de l'ordre de grandeur de 1,4 g, avec g = 9,81 m/s$^2$.

Fig 1

Fig 2

Fig 3

Fig 4